# FASCICULE DE BREVET EUROPEEN

(11) **EP 4 497 555 B1**
(45) Date de publication et mention de la délivrance du brevet: **11.03.2026**
(21) Numéro de dépôt: 24188547.4
(22) Date de dépôt: 15.07.2024
(51) Int. Cl.: B25J 15/06

(54) **ORGANE DE PRÉHENSION POUR CAISSON À VIDE**
GREIFORGAN FÜR VAKUUMBEHÄLTER
GRIPPER FOR VACUUM BOX

(30) Priorité: 25.07.2023 FR 2308020
(43) Date de publication de la demande: 29.01.2025
(73) Titulaire: COVAL, 26120 Montelier (FR)
(72) Inventeur: JOGUET, Loic, 26120 MONTELIER (FR)
(74) Mandataire: Cabinet Boettcher

(56) Documents cités:
- FR-A1- 3 043 005
- US-A1- 2009 206 216
- US-B1- 6 431 624

## Description

La présente invention concerne le domaine de la manutention par le vide.

L'invention concerne plus particulièrement un organe de préhension pour caisson à vide, et un dispositif de préhension par le vide comprenant un tel caisson.

### ARRIERE PLAN DE L'INVENTION

Les dispositifs de préhension par le vide sont utilisés dans de nombreux domaines industriels (industrie automobile, pharmaceutique, etc.), par exemple pour déplacer ou manipuler des pièces dans une chaîne de production. Ils comprennent généralement un caisson à vide comportant un panneau inférieur (couramment appelée semelle) pourvue de ventouses. Chaque ventouse comprend un corps métallique ayant un premier tronçon d'extrémité fixé dans une perforation de la plaque et un deuxième tronçon d'extrémité s'étendant à l'extérieur de la plaque et portant une jupe de caoutchouc déformable. Les ventouses sont destinées à effectuer simultanément une prise d'une pièce lorsque l'air contenu à l'intérieur du caisson est aspiré par l'intermédiaire d'un générateur de vide.

Chaque application de préhension particulière possède ses propres contraintes. En effet, les pièces que sont susceptibles de manipuler de tels caissons sont de forme, de poids et de taille variables. Les caissons doivent donc être fabriqués de manière à répondre aux contraintes particulières dans lesquelles ils sont utilisés.

Pour des raisons évidentes de performance, il n'est pas souhaitable que l'une des ventouses ne participe pas à la préhension de la pièce et continue d'aspirer de l'air pendant que les autres ventouses maintiennent la pièce. Ainsi, un caisson peut ne pas être adapté à déplacer un objet de taille plus petite que celui pour lequel il a été dimensionné.

Qui plus est, il peut ne pas être nécessaire d'utiliser l'ensemble des ventouses du caisson pour déplacer un objet plus léger que celui pour lequel il a été dimensionné. Les documents FR3043005A1, US6431624B1, US2009/206216A1 montrent des exemples d'organes de préhension.

### OBJET DE L'INVENTION

L'invention a donc pour objet de proposer un organe de préhension pour caisson à vide permettant d'obvier au moins en partie aux inconvénients précités.

### RESUME DE L'INVENTION

A cet effet, on propose, selon l'invention, un organe de préhension pour caisson à vide, comprenant un corps tubulaire qui comporte un premier tronçon délimitant une première cavité dans laquelle est monté coulissant un premier piston creux définissant avec des parois de la première cavité une première chambre de volume variable dans laquelle débouche un conduit d'air comprimé.

Le premier piston est pourvu, à l'opposé de la première chambre, d'une extension tubulaire ayant un tronçon d'extrémité libre en saillie de la première cavité et pourvu d'une ventouse. Le premier piston et l'extension tubulaire définissent un canal d'aspiration ayant une extrémité qui débouche dans la ventouse et une extrémité opposée qui reçoit à coulissement étanche une tige. L'extension tubulaire comporte au moins un premier orifice d'aspiration pour relier le canal d'aspiration à une deuxième chambre en dépression.

Le premier piston est monté mobile en translation par rapport à la tige entre une position de repos dans laquelle la tige obstrue le premier orifice d'aspiration et une position de préhension dans laquelle la tige est en retrait du premier orifice d'aspiration.

Il est ainsi possible de piloter chacun des organes de préhension d'un caisson à vide indépendamment les uns des autres et donc d'adapter le nombre d'organes de préhension utilisés pour le déplacement d'un objet considéré.

De manière particulière, le premier piston, l'extension tubulaire et la tige sont coaxiaux.

De manière particulière, le premier piston est rappelé vers sa position de repos par un premier ressort.

De manière particulière, le corps tubulaire comprend un canal d'alimentation en air comprimé ayant une extrémité débouchant dans la première chambre et une extrémité opposée débouchant à l'extérieur du corps tubulaire.

De manière particulière, le corps tubulaire comprend au moins un deuxième orifice d'aspiration ayant une extrémité débouchant dans la deuxième chambre et une extrémité opposée débouchant à l'extérieur du corps tubulaire.

Selon une caractéristique particulière de l'invention, le corps tubulaire comporte un deuxième tronçon délimitant une deuxième cavité dans laquelle est monté un deuxième piston définissant avec des parois de la deuxième cavité une troisième chambre et une quatrième chambre agencées pour être reliées respectivement à la source d'air comprimé et à l'air ambiant. La tige est solidaire du deuxième piston et définit avec ledit deuxième piston un canal d'acheminement ayant une extrémité débouchant dans le canal d'aspiration et une extrémité opposée débouchant dans la troisième chambre. Le deuxième piston est monté mobile en translation entre une position de repos dans laquelle la tige est en retrait de l'orifice d'aspiration du premier piston en position de repos, et une position de dépose dans laquelle la tige obstrue l'orifice d'aspiration.

De manière particulière, le premier piston et le deuxième piston sont coaxiaux.

De manière particulière, le deuxième piston est rappelé vers sa position de repos par un deuxième ressort.

L'invention concerne aussi un caisson à vide équipé d'au moins un tel organe de préhension.

L'invention concerne en outre un dispositif de préhension par le vide comprenant un tel caisson.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig.1] la figure 1 est une vue en coupe axiale d'un dispositif de préhension selon un mode de réalisation particulier de l'invention ;
[Fig.2A] la figure 2A est une vue en coupe axiale du dispositif illustré à la figure 1, avant la prise de l'objet ;
[Fig.2B] la figure 2B est une vue identique à la figure 2A, pendant la prise de l'objet ;
[Fig.2C] la figure 2C est une vue en coupe identique à la figure 2A, pendant la dépose de l'objet ;
[Fig.2D] la figure 2D est une vue en coupe identique à la figure 2A, après la dépose de l'objet.

### DESCRIPTION DETAILLEE DE L'INVENTION

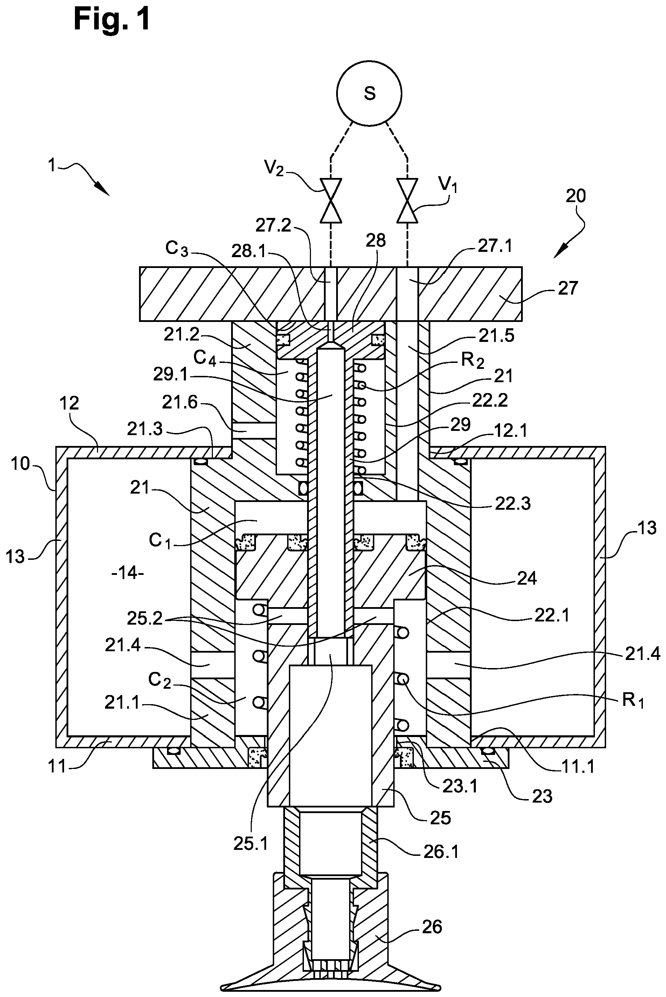

En référence à la figure 1, un dispositif de préhension par le vide, généralement désigné en 1, comprend un caisson 10 à vide dans lequel est monté une pluralité d'organes de préhension 20 par le vide (seul l'un des organes de préhension 20 est représenté).

Le caisson 10 comporte un panneau inférieur 11, un panneau supérieur 12 et des panneaux latéraux 13 reliant le panneau inférieur 11 au panneau supérieur 12 pour former une enceinte 14 étanche. L'enceinte 14 a ici une forme de parallélépipède rectangle et est destinée à être reliée à une source de génération de vide (non représentée).

Le panneau inférieur 11 et le panneau supérieur 12 comprennent respectivement des premiers orifices 11.1 et des deuxièmes orifices 12.1 de réception des organes de préhension 20. Les premiers orifices 11.1 et les deuxièmes orifices 12.1 sont de forme circulaire, chacun des deuxièmes orifices 12.1 s'étendant ici coaxialement en regard de l'un des premiers orifices 11.1. Les premiers orifices 11.1 ont ici un diamètre supérieur à celui des deuxièmes orifices 12.1.

Chacun des organes de préhension 20 comprend un corps tubulaire 21 ayant un axe X central sensiblement perpendiculaire au panneau inférieur 11 et au panneau supérieur 12. Le corps tubulaire 21 est globalement de forme cylindrique et comprend extérieurement un épaulement 21.3 délimitant un premier tronçon 21.1 et un deuxième tronçon 21.2 dudit corps tubulaire 21. Le premier tronçon 21.1 et le deuxième tronçon 21.2 sont reçus à ajustement respectivement dans l'un des premiers orifices 11.1 et dans le deuxième orifice 12.1 correspondant. L'épaulement 21.3 est en contact étanche avec une face interne du panneau supérieur 12.

Le premier tronçon 21.1 s'étend à l'intérieur du caisson 10 et comprend un premier alésage 22.1 débouchant sur une extrémité libre du premier tronçon 21.1. Le deuxième tronçon 21.2 s'étend à l'extérieur du caisson 10, en saillie d'une face externe du panneau supérieur 12, et comprend un deuxième alésage 22.2 débouchant sur une extrémité libre du deuxième tronçon 21.2. Le premier alésage 22.1 et le deuxième alésage 22.2 s'étendent selon l'axe X et sont coaxiaux.

Le corps tubulaire 21 comprend également un troisième alésage 22.3, coaxial au premier alésage 22.1 et au deuxième alésage 22.2, reliant un fond dudit premier alésage 22.1 à un fond du deuxième alésage 22.2.

L'extrémité libre du premier tronçon 21.1 reçoit une plaque de maintien 23 en position dudit premier tronçon 21.1 dans le caisson 10. La plaque de maintien 23 et le premier alésage 22.1 définissent ensemble une première cavité à l'intérieur de laquelle un premier piston 24 est monté coulissant selon l'axe X. Le premier piston 24 définit, avec les parois de la première cavité, une première chambre C₁ et une quatrième chambre C₂, toutes deux de volume variable.

Le premier tronçon 21.1 comprend des orifices d'aspiration 21.4 ayant une extrémité débouchant dans la deuxième chambre C₂ et une extrémité opposée débouchant dans le caisson 10. Les orifices d'aspiration 21.4 sont ici symétriquement et équitablement répartis autour de l'axe X, dans un même plan perpendiculaire à l'axe X.

Le corps tubulaire 20 comprend également un canal 21.5 d'alimentation de la première chambre C₁ en air comprimé. Le canal 21.5 d'alimentation s'étend selon un axe sensiblement parallèlement à l'axe X, et comprend une extrémité débouchant dans la première chambre C₁ et une extrémité opposée débouchant dans un premier orifice 27.1 d'alimentation en air comprimé ménagé dans la platine 27. Le premier orifice 27.1 d'alimentation a une extrémité débouchant dans le canal 21.5 d'alimentation et une extrémité opposée destinée à être sélectivement reliée à la source d'air comprimé S via une première électrovanne V₁ commandée, par exemple, par un automate ou une carte électronique (non représentés).

Le premier piston 24 est creux et est pourvu d'une extension tubulaire 25 qui s'étend selon l'axe X depuis une face inférieure du premier piston 24 et qui traverse de manière étanche une ouverture 23.1 circulaire ménagée dans la plaque de maintien 23, de sorte qu'un tronçon d'extrémité libre de l'extension tubulaire 25 s'étend à l'extérieur du caisson 10, en saillie d'une face externe du panneau inférieur 11. Le premier piston 24 et l'extension tubulaire 25 délimitent un canal d'aspiration 25.1 s'étendant selon l'axe X. Le canal d'aspiration 25.1 a une extrémité reliée à une ventouse de préhension 26 qui est fixée au tronçon d'extrémité libre de l'extension tubulaire 25 via un insert 26.1.

L'extension tubulaire 25 comprend des orifices d'aspiration 25.2 ayant une extrémité débouchant dans le canal d'aspiration 25.1 et une extrémité opposée débouchant dans la deuxième chambre C₂. Les orifices d'aspiration 25.2 sont ici symétriquement et équitablement répartis autour de l'axe X, dans un plan perpendiculaire à l'axe X.

L'extrémité libre du deuxième tronçon 21.2 reçoit une platine 27 de connexion à un dispositif de soufflage. La platine 27 et le deuxième alésage 22.2 définissent ensemble une deuxième cavité à l'intérieur de laquelle un deuxième piston 28 est montée coulissant selon l'axe X. Le deuxième piston 28 définit, avec les parois de la deuxième cavité, une troisième chambre C₃ et une quatrième chambre C₄, toutes deux de volume variable.

La platine 27 comprend un deuxième orifice 27.2 d'alimentation en air comprimé ayant une extrémité débouchant dans la troisième chambre C₃ et une extrémité opposée destinée à être sélectivement reliée à une source d'air comprimé S via une deuxième électrovanne V₂ commandée par l'automate ou la carte électronique (non représentés). Le deuxième tronçon 21.2 comprend un orifice 21.6 de mise à l'air ayant une extrémité débouchant dans la quatrième chambre C₄ et une extrémité opposée débouchant à l'extérieur du caisson 10.

Le deuxième piston 28 est pourvu d'une tige 29 qui s'étend selon l'axe X, depuis une face inférieure du deuxième piston 28, et qui traverse de manière étanche le troisième alésage 22.3 de sorte qu'un tronçon d'extrémité libre de la tige 29 s'étend dans le premier alésage 22.1. Le tronçon d'extrémité libre de la tige 29 est reçue à coulissement étanche dans le canal d'aspiration 25.1 délimité par le premier piston 24 et l'extension tubulaire 25.

La tige 29 est creuse et délimite avec le deuxième piston 28 un canal 29.1 d'acheminement en air comprimé ayant une extrémité débouchant dans le canal d'aspiration 25.1 et une extrémité opposée débouchant dans la troisième chambre C₃ via un orifice 28.1 d'acheminement en air comprimé ménagé sur une face supérieure du deuxième piston 28. On notera que l'orifice 28.1 d'acheminement a un diamètre inférieur à celui du deuxième orifice 27.2 d'alimentation de la platine 27, qui est lui-même inférieur à celui du canal 29.1 d'acheminement de la tige 29. En fait, tant que l'un de l'orifice 28.1 d'acheminement et du canal 29.1 d'acheminement a un diamètre inférieur celui du deuxième orifice 27.2 d'alimentation, le diamètre de l'autre de l'orifice 28.1 d'acheminement et du canal 29.1 d'acheminement importe peu (le diamètre de l'orifice 28.1 d'acheminement peut être égal à celui du canal 29.1 d'acheminement).

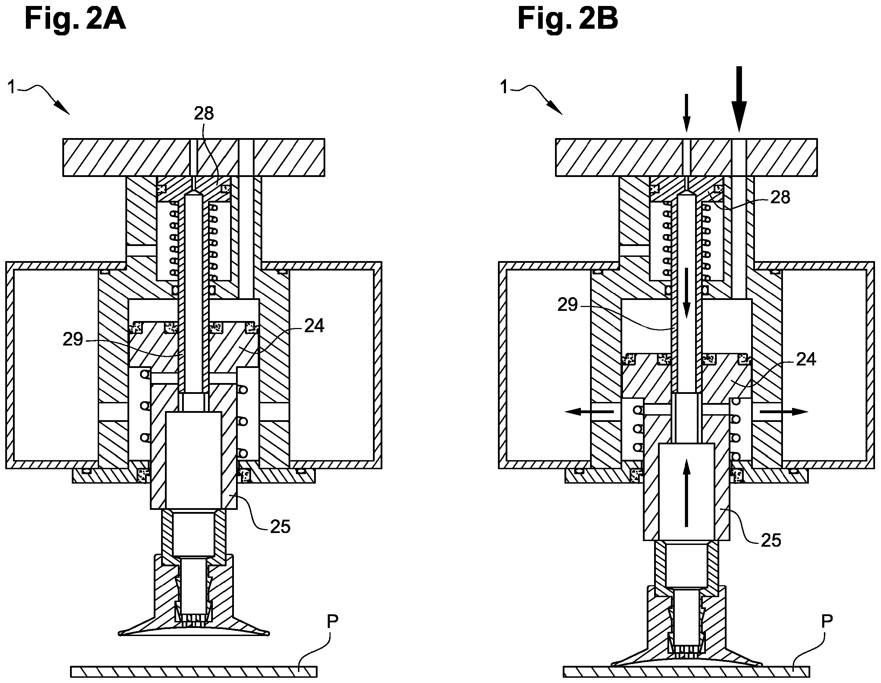

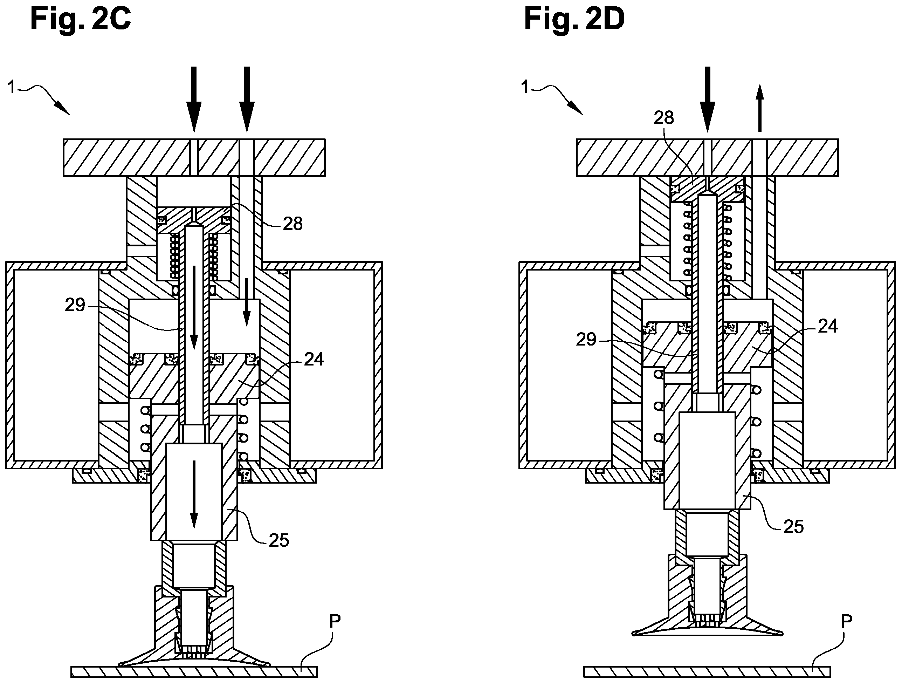

Le premier piston 24 est monté coulissant entre une position haute dite de repos dans laquelle une face supérieure du premier piston 24 est proche du fond du premier alésage 22.1 (figures 1, 2A et 2D), et une position basse dite de préhension dans laquelle la face supérieure du premier piston 24 est éloignée du fond du premier alésage 22.1 (figures 2B et 2C). Le premier piston 24 est rappelé vers la position haute par un premier ressort R₁ hélicoïdal entourant l'extension tubulaire 25. Le premier ressort R₁ a une extrémité en appui contre une face interne de la plaque de maintien 23 et la face inférieure du premier ressort R₁.

Le deuxième piston 28 est monté coulissant entre une position haute dite de repos dans laquelle la face supérieure du deuxième piston 28 est en contact avec une face inférieure de la platine 27 (figures 1, 2A, 2B et 2D), et une position basse dite de dépose dans laquelle la face supérieure du deuxième piston 28 est éloignée de la platine 27 (figure 2C). Le deuxième piston 28 est rappelé vers la position haute par un deuxième ressort R₂ hélicoïdal entourant la tige 29. Le deuxième ressort R₂ a une extrémité en appui contre le fond du deuxième alésage 22.2 et une extrémité opposée en appui contre la face inférieure du deuxième piston 28.

Le tronçon d'extrémité libre de la tige 29 est agencée de manière à ce que :
- lorsque le premier piston 24 et le deuxième piston 28 sont tous les deux en position haute (figures 1, 2A et 2D) ou en position basse (figure 2C), le tronçon d'extrémité de la tige 29 obstrue totalement les orifices d'aspiration 25.2 de l'extension tubulaire 25 sorte que la ventouse 26 n'est pas en communication fluidique avec le caisson 10 ; et
- lorsque le premier piston 24 est en position basse et le deuxième piston 28 en position haute (figure 2B), le tronçon d'extrémité de la tige 29 est en retrait des orifices d'aspiration 25.2 de sorte que la ventouse 26 est en communication fluidique avec le caisson 10.

Le fonctionnement de l'organe de préhension 20 va maintenant être détaillé au regard des figures 2A à 2D.

Alors que la première électrovanne V₁ et la deuxième électrovanne V₂ sont à l'état fermé, le caisson 10 portant l'organe de préhension 20 est amené au-dessus d'un objet P à déplacer, par exemple via un bras robotisé de manutention (non représenté), de manière à ce que la ventouse 26 de l'organe de préhension 20 soit espacée de l'objet P d'une distance légèrement inférieure à la course du premier piston 24 (figure 2A).

La première électrovanne V₁ est ensuite amenée de l'état fermé à l'état ouvert de sorte que de l'air comprimé est insufflé dans la première chambre C₁, ce qui a pour effet de faire passer le premier piston 24 de la position haute à la position basse (figure 2B). La ventouse 26 se retrouve alors en appui contre une surface supérieure de l'objet P et est désormais en communication fluidique avec le caisson 10 à vide, le tronçon d'extrémité de la tige 29 n'obstruant plus les orifices d'aspiration 25.2 de l'extension tubulaire 25. On comprend que la ventouse 26 exerce un effort d'aspiration sur la surface supérieure de l'objet P, ce qui engendre une préhension par le vide de l'objet P via ladite ventouse 26.

On notera également qu'il est possible de mesurer le vide au niveau du deuxième orifice 27.2 d'alimentation de la platine 27, cette mesure étant représentative de l'effort d'aspiration exercée par la ventouse 26.

Alors que la première électrovanne V₁ est maintenue à l'état ouvert, le caisson 10 est amené via le bras robotisé au-dessus du support sur lequel l'objet P doit être déposé, de manière à ce que l'objet P soit espacé du support d'une distance inférieure à une distance prédéterminée. La deuxième électrovanne V₂ est ensuite amenée de l'état fermé à l'état ouvert de sorte que de l'air comprimé est insufflé dans la troisième chambre C₃, ce qui a pour effet de faire passer le deuxième piston 28 de la position haute à la position basse (figure 2C). Le tronçon d'extrémité de la tige 29 obstrue alors totalement les orifices d'aspiration 25.2 de l'extension tubulaire 25, et l'air comprimé insufflé dans la troisième chambre C₃ via le deuxième orifice 27.2 d'alimentation traverse le canal 29.1 d'acheminement et arrive dans la ventouse 26. On comprend alors que l'objet P est soufflé et qu'il va ainsi tomber par gravité sur le support, la ventouse 26 n'exerçant alors plus aucun effort d'aspiration sur l'objet **P.**

Une fois l'objet P déposé sur le support, le bras robotisé effectue un mouvement de retrait permettant d'éloigner la ventouse 26 de l'objet P. Alors que la deuxième électrovanne V₂ est maintenue à l'état ouvert, la première électrovanne V₁ est amenée de l'état ouvert à l'état fermé de sorte que, sous l'action du premier ressort R₁ et du deuxième ressort R₂, le premier piston 24 et le deuxième piston 28 passent sensiblement simultanément de la position basse à la position haute. La deuxième électrovanne V₂ est enfin amenée de l'état ouvert à l'état fermé, l'organe de préhension 20 étant de nouveau prêt pour une nouvelle préhension par le vide.

On notera que :
- les différents organes de préhensions 20 portés par le caisson 10 peuvent être commandés indépendamment les uns des autres, ce qui permet de n'utiliser qu'une partie des organes de préhension 20 pour déplacer un objet (notamment en fonction des dimensions de l'objet P, de sa taille, de son poids...) ;
- le passage du premier piston 24 de la position haute à la position basse permet d'éviter que les ventouses 26 des organes de préhension 20 non utilisés entrent en contact avec l'objet P à manipuler ;
- le passage du deuxième piston 28 de la position haute à la position basse permet d'effectuer la dépose sélective et asynchrone d'objets P ; et
- le premier ressort R₁ et le deuxième ressort R₂ permettent respectivement d'assurer la remontée du premier piston 24 et du deuxième piston 28 tout en conservant l'insufflation d'air comprimé dans la ventouse 26 afin de limiter le risque d'auto-aspiration par la ventouse 26 lorsque le bras robotisé ne peut assurer un mouvement de retrait après la dépose de l'objet P.

Bien entendu, l'invention n'est pas limitée aux modes de réalisation décrits mais englobe toute variante entrant dans le champ de l'invention telle que définie par les revendications.

Le caisson 10 peut ne porter qu'un unique organe de préhension 20.

La première électrovanne V₁ et la deuxième électrovanne V₂ peuvent être remplacées par tout dispositif permettant de relier sélectivement le premier orifice 27.1 d'alimentation 27.1 et le deuxième orifice 23.2 d'alimentation à la source d'air comprimé S.

Le premier orifice 27.1 d'alimentation et le deuxième orifice 27.2 d'alimentation de la platine 27 peuvent être reliés à des sources d'air comprimé distinctes.

Le deuxième piston 28 est optionnel. La tige 29 est alors fixe par rapport au corp tubulaire 20 et la dépose de l'objet P se fait alors uniquement par gravité dès lors que la ventouse 26 n'est plus en communication fluidique avec le caisson 10 à vide, c'est-à-dire lorsque la première électrovanne V₁ est amenée de l'état ouvert à l'état fermé. Dans le cas où il est nécessaire d'insuffler de l'air comprimé dans la ventouse 26 pour déposer l'objet P, une vanne d'inversion peut être montée sur le générateur de vide relié au caisson 10 afin d'alterner vide et pression dans l'enceinte 14 dudit caisson 10.

Un clapet anti-retour peut être ajouté au deuxième piston 28 afin d'éviter un apport d'air comprimé dans l'enceinte 14 du caisson 10 lors du passage l'état fermé à l'état ouvert de la deuxième électrovanne V₂.

## Revendications

1. Organe de préhension (20) pour caisson à vide, comprenant un corps tubulaire (21) qui comporte un premier tronçon (21.1) délimitant une première cavité dans laquelle est monté coulissant un premier piston (24) creux définissant avec des parois de la première cavité une première chambre (C₁) de volume variable dans laquelle débouche un conduit d'air comprimé (S),
le premier piston étant pourvu, à l'opposé de la première chambre, d'une extension tubulaire (25) ayant un tronçon d'extrémité libre en saillie de la première cavité et pourvu d'une ventouse, le premier piston et l'extension tubulaire définissant un canal d'aspiration (25.1) ayant une extrémité qui débouche dans la ventouse (26) et une extrémité opposée qui reçoit à coulissement étanche une tige (29),
l'extension tubulaire comportant au moins un premier orifice d'aspiration (25.2) pour relier le canal d'aspiration à une deuxième chambre (C₂) en dépression, et le premier piston étant monté mobile en translation par rapport à la tige entre une position de repos dans laquelle la tige obstrue le premier orifice d'aspiration et une position de préhension dans laquelle la tige est en retrait du premier orifice d'aspiration.

2. Organe de préhension (20) selon la revendication 1, dans lequel le premier piston (24), l'extension tubulaire (25) et la tige (29) sont coaxiaux.

3. Organe de préhension (20) selon l'une quelconque des revendications précédentes, dans lequel le premier piston (24) est rappelé vers sa position de repos par un premier ressort (R₁).

4. Organe de préhension (20) selon l'une quelconque des revendications précédentes, dans lequel le corps tubulaire (21) comprend un canal d'alimentation en air comprimé (21.5) ayant une extrémité débouchant dans la première chambre (C₁) et une extrémité opposée débouchant à l'extérieur du corps tubulaire (21).

5. Organe de préhension (20) selon l'une quelconque des revendications précédentes, dans lequel le corps tubulaire (21) comprend au moins un deuxième orifice d'aspiration (21.4) ayant une extrémité débouchant dans la deuxième chambre (C₂) et une extrémité opposée débouchant à l'extérieur du corps tubulaire (21).

6. Organe de préhension (20) selon l'une quelconque des revendications précédentes, dans lequel le corps tubulaire comporte un deuxième tronçon (21.2) délimitant une deuxième cavité dans laquelle est monté un deuxième piston (28) définissant avec des parois de la deuxième cavité une troisième chambre (C₃) et une quatrième chambre (C₄) agencées pour être reliées respectivement à la source d'air comprimé (S) et à l'air ambiant,
la tige étant solidaire du deuxième piston et définissant avec ledit deuxième piston un canal d'acheminement (29.1) ayant une extrémité débouchant dans le canal d'aspiration (25.1) et une extrémité opposée débouchant dans la troisième chambre (C₃), et
le deuxième piston étant monté mobile en translation entre une position de repos dans laquelle la tige est en retrait de l'orifice d'aspiration du premier piston en position de repos, et une position de dépose dans laquelle la tige obstrue l'orifice d'aspiration.

7. Organe de préhension (20) selon la revendication 6, dans lequel le premier piston (24) et le deuxième piston (28) sont coaxiaux.

8. Organe de préhension (20) selon la revendication 6 ou 7, dans lequel le deuxième piston (28) est rappelé vers sa position de repos par un deuxième ressort (R₂).

9. Caisson à vide (10) équipé d'au moins un organe de préhension (20) selon l'une quelconque des revendications précédentes.

10. Dispositif de préhension par le vide (1) comprenant un caisson (10) selon la revendication 9.

## Patentansprüche

1. Greiforgan (20) für Vakuumbehälter, umfassend einen rohrförmigen Körper (21), der einen ersten Abschnitt (21.1) enthält, der einen ersten Hohlraum begrenzt, in welchem ein erster Hohlkolben (24) verschiebbar angebracht ist, der zusammen mit Wänden des ersten Hohlraums eine erste Kammer (C₁) mit variablem Volumen definiert, in welche eine Druckluftleitung (S) mündet,
wobei der erste Kolben mit einer der ersten Kammer gegenüberliegenden rohrförmigen Verlängerung (25) versehen ist, die einen freien Endabschnitt aufweist, der aus dem ersten Hohlraum herausragt, sowie mit einem Saugnapf versehen ist, wobei der erste Kolben und die rohrförmige Verlängerung einen Ansaugkanal (25.1) definieren, der ein in den Saugnapf (26) mündendes Ende und ein entgegengesetztes Ende aufweist, in welchem eine Stange (29) abdichtend verschiebbar aufgenommen wird,
wobei die rohrförmige Verlängerung zumindest eine erste Ansaugöffnung (25.2) enthält, die den Ansaugkanal mit einer zweiten Unterdruckkammer (C₂) verbindet, und wobei der erste Kolben in Bezug auf die Stange zwischen einer Ruhestellung, in welcher die Stange die erste Ansaugöffnung verschließt, und einer Greifstellung, in welcher die Stange von der ersten Ansaugöffnung beabstandet ist, translatorisch verschiebbar angebracht ist.

2. Greiforgan (20) nach Anspruch 1, wobei der erste Kolben (24), die rohrförmige Verlängerung (25) und die Stange (29) koaxial zueinander verlaufen.

3. Greiforgan (20) nach einem der vorhergehenden Ansprüche, wobei der erste Kolben (24) durch eine erste Feder (R₁) in seine Ruhestellung zurückgeführt wird.

4. Greiforgan (20) nach einem der vorhergehenden Ansprüche, wobei der rohrförmige Körper (21) einen Druckluftzuführkanal (21.5) umfasst, der mit einem Ende in die erste Kammer (C₁) und mit einem entgegengesetzten Ende von dem rohrförmigen Körper (21) nach Außen mündet.

5. Greiforgan (20) nach einem der vorhergehenden Ansprüche, wobei der rohrförmige Körper (21) zumindest eine zweite Ansaugöffnung (21.4) umfasst, die mit einem Ende in die zweite Kammer (C₂) und mit einem entgegengesetzten Ende von dem rohrförmigen Körper (21) nach Außen mündet.

6. Greiforgan (20) nach einem der vorhergehenden Ansprüche, wobei der rohrförmige Körper einen zweiten Abschnitt (21.2) enthält, der einen zweiten Hohlraum begrenzt, in welchem ein zweiter Kolben (28) angebracht ist, der zusammen mit Wänden des zweiten Hohlraums eine dritte Kammer (C₃) und eine vierte Kammer (C₄) definiert, welche dafür ausgelegt sind, jeweils mit der Druckluftquelle (S) bzw. mit der Umgebungsluft verbunden zu sein,
wobei die Stange fest mit dem zweiten Kolben verbunden ist und zusammen mit diesem zweiten Kolben einen Zuführkanal (29.1) definiert, der mit einem Ende in den Ansaugkanal (25.1) und mit einem entgegengesetzten Ende in die dritte Kammer (C₃) mündet, und
wobei der zweite Kolben zwischen einer Ruhestellung, in welcher die Stange von der Ansaugöffnung des ersten, in Ruhestellung befindlichen Kolbens beabstandet ist, und einer Ablegestellung, in welcher die Stange die Ansaugöffnung verschließt, translatorisch verschiebbar angebracht ist.

7. Greiforgan (20) nach Anspruch 6, wobei der erste Kolben (24) und der zweite Kolben (28) koaxial zueinander verlaufen.

8. Greiforgan (20) nach Anspruch 6 oder 7, wobei der zweite Kolben (28) durch eine zweite Feder (R₂) in seine Ruhestellung zurückgeführt wird.

9. Vakuumbehälter (10), der mit zumindest einem Greiforgan (20) nach einem der vorhergehenden Ansprüche ausgestattet ist.

10. Vakuum-Greifvorrichtung (1), die einen Behälter (10) nach Anspruch 9 umfasst.

## Claims

1. Grip member (20) for a vacuum box, comprising a tubular body (21) which comprises a first section (21.1) delimiting a first cavity in which a first hollow piston (24) is slidingly mounted, defining with walls of the first cavity, a first chamber (C₁) of variable volume, into which a compressed air conduit (S) opens,
the first piston being provided, opposite the first chamber, with a tubular extension (25) having a free end section projecting from the first cavity and provided with a suction cup, the first piston and the tubular extension defining a suction channel (25.1) having an end which opens into the suction cup (26) and an opposite end which slidingly, sealingly receives a rod (29),
the tubular extension comprising at least one first suction orifice (25.2) to connect the suction channel to a second chamber (C₂) under negative pressure and
the first piston being movably mounted in translation with respect to the rod between a rest position in which the rod blocks the first suction orifice and a gripping position in which the rod is recessed from the first suction orifice.

2. Grip member (20) according to claim 1, wherein the first piston (24), the tubular extension (25) and the rod (29) are coaxial.

3. Grip member (20) according to any one of the preceding claims, wherein the first piston (24) is returned to its rest position by a first spring (R₁).

4. Grip member (20) according to any one of the preceding claims, wherein the tubular body (21) comprises a compressed air supply channel (21.5) having an end opening into the first chamber (C₁) and an opposite end opening to the outside of the tubular body (21).

5. Grip member (20) according to any one of the preceding claims, wherein the tubular body (21) comprises at least one second suction orifice (21.4) having an end opening into the second chamber (C₂) and an opposite end opening to the outside of the tubular body (21).

6. Grip member (20) according to any one of the preceding claims, wherein the tubular body comprises a second section (21.2) delimiting a second cavity in which a second piston (28) is mounted, defining with walls of the second cavity, a third chamber (C₃) and a fourth chamber (C₄) arranged to be connected respectively to the compressed air source (S) and to the ambient air,
the rod being secured to the second piston and defining with said second piston, a delivery channel (29.1) having an end opening into the suction channel (25.1) and an opposite end opening into the third chamber (C₃), and
the second piston being movably mounted in translation between a rest position in which the rod is recessed from the suction orifice of the first piston in the rest position, and a deposition position in which the rod blocks the suction orifice.

7. Grip member (20) according to claim 6, wherein the first piston (24) and the second piston (28) are coaxial.

8. Grip member (20) according to claim 6 or 7, wherein the second piston (28) is returned to its rest position by a second spring (R₂).

9. Vacuum box (10) equipped with a grip member (20) according to any one of the preceding claims.

10. Device for gripping by vacuum (1) comprising a box (10) according to claim 9.
